# EUROPEAN PATENT APPLICATION

(11) **EP 4 057 416 A1**
(43) Date of publication of application: **14.09.2022**
(21) Application number: 21869763.9
(22) Date of filing: 16.09.2021
(51) Int. Cl.: H01M 10/058, H01M 10/44, H01M 4/62, H01M 10/42, H01M 10/052

(54) **LITHIUM SECONDARY BATTERY ACTIVATION METHOD AND LITHIUM SECONDARY BATTERY**

(30) Priority: 21.09.2020 KR 20200121825
(71) Applicant: LG Energy Solution, Ltd., Seoul 07335 (KR)
(72) Inventor: LIM, Sung Chul, Daejeon 34122 (KR); CHOI, Young Cheol, Daejeon 34122 (KR); JANG, Min Chul, Daejeon 34122 (KR); PARK, Cheol Hee, Daejeon 34122 (KR); KWON, Yo Han, Daejeon 34122 (KR); KIM, Il Hong, Daejeon 34122 (KR); SEO, Joon Kyo, Daejeon 34122 (KR)
(74) Representative: Hoffmann Eitle
(86) International application number: PCT/KR2021/012737
(87) International publication number: WO 2022/060141

(57) **Abstract**

The present invention relates to an activation method a lithium secondary battery, and a lithium secondary battery manufactured through the activation method, wherein the activation method includes step 1 of preparing a secondary battery including a positive electrode having a sacrificial positive electrode material represented by Formula 1 and having an orthorhombic structure, a negative electrode, a separator interposed between the positive electrode and the negative electrode, and an electrolyte solution, and Step 2 of charging the secondary battery and then holding the secondary battery for a predetermined period of time at a voltage of 3.2 V or greater.

## Description

### TECHNICAL FIELD

This application claims priority from Korean Patent Application No. 10-2020-0121825, filed on September 21, 2020, the disclosures of which are incorporated by reference herein.

The present invention relates to an activation method of a lithium secondary battery and a lithium secondary battery.

### BACKGROUND ART

As technology development and demand for mobile devices have increased, the demand for secondary batteries as an energy source has been rapidly increased. Among such secondary batteries, lithium secondary batteries having high energy density and voltage, long cycle life, and low self-discharging rate have been commercialized and widely used.

In general, a lithium secondary battery is manufactured in the following manner. A composition for forming an electrode active material layer which includes an electrode active material is applied on an electrode current collector and then dried to manufacture an electrode (positive electrode and negative electrode). A separator is interposed between the positive electrode and the negative electrode to form an electrode assembly, and the electrode assembly is inserted into a battery case and sealed. Thereafter, in order to determine whether a secondary battery is defective, and to ensure the performance of the secondary battery, particularly the stability of lifespan, an activation process must be performed before shipping a product. The activation process is to repeat charging and discharging to activate a battery and to remove gas from the same. Meanwhile, when charging a secondary battery, lithium ions from a lithium metal oxide used as a positive electrode are moved and intercalated into a carbon electrode used as a negative electrode. At this time, a compound such as Li₂CO₃, LiO, LiOH, or the like is produced from the carbon (crystalline or amorphous) electrode due to high reactivity of lithium. Then, the compound such as Li₂CO₃, LiO, LiOH, or the like forms a solid electrolyte interface (SEI) film on the surface of the negative electrode. Meanwhile, due to the solid electrolyte interface film, irreversibility occurs between the positive electrode and the negative electrode. Accordingly, there is a problem in that the energy density of the lithium secondary battery is reduced.

In order to prevent the problem, there is a method in that Li₂NiO₂ is used as a sacrificial positive electrode material. However, Li₂NiO₂ has an orthorhombic structure with a space group of Immm in a lithium secondary battery in which an activation process is completed, so that there is a problem in that impurities or gas are generated since a three-step structure change (orthorhombic structure with a space group of Immm -> trigonal structure with a space group of R-3m -> monoclinic structure with a space group of C2/m) occurs within an available voltage range after the activation process.

Therefore, there is a demand for a method capable of solving the problem in which impurities or gas are generated within an available voltage range.

### DISCLOSURE OF THE INVENTION

### TECHNICAL PROBLEM

An aspect of the present invention provides a method for activating a lithium secondary battery, the method capable of adjusting the crystal structure of a sacrificial positive electrode material so that side effects of the sacrificial positive electrode material occurring in an available voltage range are minimized.

### TECHNICAL SOLUTION

According to an aspect of the present invention, there is provided a method for activating a lithium secondary battery, the method including step 1 of preparing a secondary battery including a positive electrode having a sacrificial positive electrode material represented by Formula 1 below and having an orthorhombic structure, a negative electrode, a separator interposed between the positive electrode and the negative electrode, and an electrolyte solution, and step 2 of charging the secondary battery and then holding the secondary battery for a predetermined period of time at a voltage of 3.2 V or greater.

[Formula 1] Li₂Ni₁₋ₓMₓO₂

M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

According to another aspect of the present invention, there is provided a lithium secondary battery, which is a secondary battery including a positive electrode including a sacrificial positive electrode material represented by Formula 2 below, a negative electrode, a separator interposed between the positive electrode and the negative electrode, and an electrolyte solution, wherein the sacrificial positive electrode material is a single phase having a trigonal structure in a discharged state.

[Formula 2] LiNi₁₋ₓMₓO₂

M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

### ADVANTAGEOUS EFFECTS

A method for activating a lithium secondary battery of the present invention includes a process of changing the crystal structure of a sacrificial positive electrode material from an orthorhombic structure to a trigonal structure, so that lithium ions may be easily replenished during an initial charging, and a sacrificial positive electrode material having a crystal structure capable of minimizing side effects within an available voltage range may be provided.

### BRIEF DESCRIPTION OF THE DRAWINGS

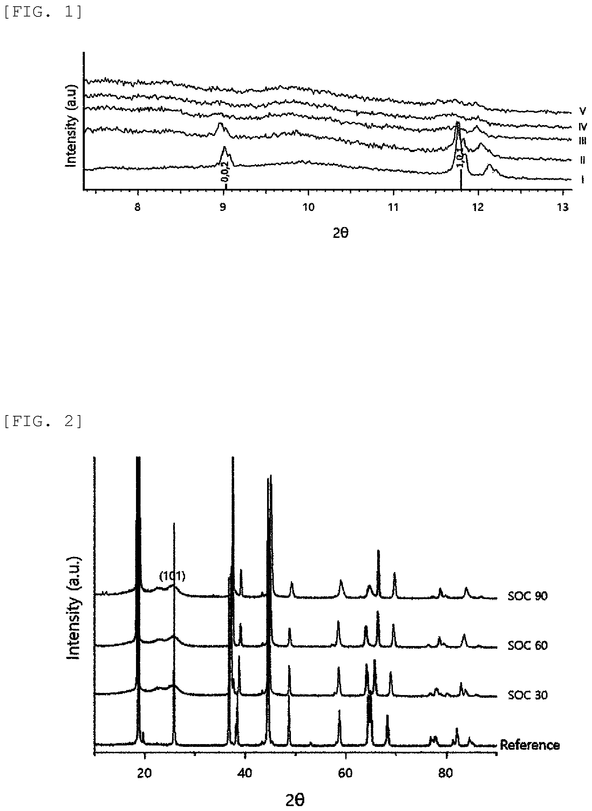

FIG. 1 is a view illustrating XRD patterns measured using an in-situ XRD with respect to a sacrificial positive electrode material during the activation of a secondary battery in Example 1 and with respect to the sacrificial positive electrode material during the charging of the activated secondary battery;
FIG. 2 is a view illustrating XRD patterns measured using an ex-situ XRD with respect to a sacrificial positive electrode material included in a secondary battery, after charging a secondary battery of Comparative Example 1, which has been subjected to a typical activation process, to SOC 30, 60, and 90; and

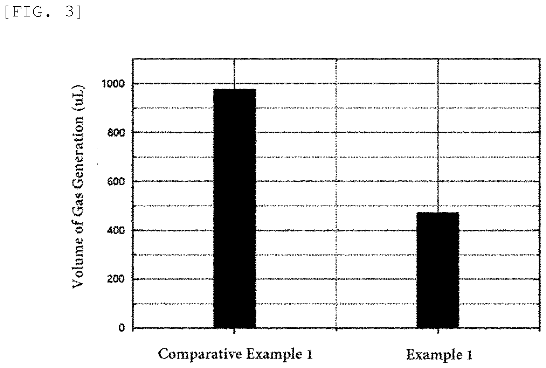

FIG. 3 is a view showing the volume of gas generation during the performance of an initial reference performance test on each of secondary batteries of good quality manufactured in Example 1 and Comparative Example 1.

### MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Activation method of lithium secondary battery

An activation method of a lithium secondary battery according to the present invention includes step 1 of preparing a secondary battery including a positive electrode having a sacrificial positive electrode material represented by Formula 1 below and having an orthorhombic structure, a negative electrode, a separator interposed between the positive electrode and the negative electrode, and an electrolyte solution, and step 2 of charging the secondary battery and then holding the secondary battery for a predetermined period of time at a voltage of 3.2 V or greater.

[Formula 1] .Li₂Ni₁₋ₓMₓO₂

In Formula 1 above,
M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

The activation method of a lithium secondary battery may further include, before performing step 2, a pre-aging step of primarily aging the secondary battery at room temperature.

In addition, the activation method of a lithium secondary battery may further include a room-temperature aging step of secondarily aging the secondary battery, which has been subjected to step 2, at room temperature, a high-temperature aging step of thirdly aging the secondarily-aged secondary battery at a high temperature, and a degassing step of removing gas from the thirdly-aged secondary battery.

In addition, the activation method of a lithium secondary battery may further include, after performing the degassing step, a step of determining whether the secondary battery is defective or not.

Hereinafter, the activation method of a lithium secondary battery according to the present invention will be described in detail.

### Step 1

Step 1 is a step of preparing a secondary battery including a positive electrode having a sacrificial positive electrode material represented by Formula 1 below and having an orthorhombic structure, a negative electrode, a separator interposed between the positive electrode and the negative electrode, and an electrolyte solution.

[Formula 1] Li₂Ni₁₋ₓMₓO₂

M is one or more selected from Ti, V, Cr, Mn, Fe, Co, Cu, Zn, Zr, Nb, Mo, Ru, Rh, Pd, Ag, Cd, Hf, Ta, and W, and
.0≤x<0.9.

The crystal structure of the sacrificial positive electrode material may completely change from the orthorhombic structure to a trigonal structure through step 2.

The sacrificial positive electrode material is a material to compensate for lithium ions consumed in SEI layer formation or by-products. The sacrificial positive electrode material is a material with easy deintercalation of lithium, and as lithium is de-intercalated through step 2 to be described later, the crystal structure of the sacrificial positive electrode material represented by Formula 1 above and having an orthorhombic is permanently changed from the orthorhombic structure to a thermodynamically stable trigonal structure.

The secondary battery may include, specifically, one or more unit electrodes including a positive electrode and a negative electrode, and an electrode assembly wound with a separator interposed between the unit electrodes may be embedded in a battery case. The secondary battery may be a cylindrical, square, or pouch-type secondary battery.

The positive electrode and the negative electrode may be manufactured by applying a composition for forming an active material layer including an electrode active material on each current collector, followed by drying.

A composition for forming a positive electrode active material layer may selectively further include a binder, a conductive material, a filler, and the like as needed in addition to the sacrificial positive electrode material represented by Formula 1 above and having an orthorhombic structure and a positive electrode active material. A composition for forming a negative electrode active material layer may selectively further include a binder, a conductive material, a filler, and the like as needed in addition to a negative electrode active material.

The current collector is not particularly limited as long as it has a high conductivity without causing a chemical change in a battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the current collector may typically have a thickness of 3 pm to 500 µm, and microscopic irregularities may be formed on the surface of the current collector to improve the adhesion of an active material. For example, the current collector may be used in various forms such as a film, a sheet, a foil, a net, a porous body, a foam, and a non-woven body.

The positive electrode active material is a material capable of causing an electrochemical reaction, and is a lithium transition metal oxide which includes two or more transition metals, and may be, for example, a layered compound such as a lithium cobalt oxide (LiCoO₂) or a lithium nickel oxide (LiNiO₂) substituted with one or more transition metals; a lithium manganese oxide substituted with one or more transition metals; a lithium nickel-based oxide represented by Formula LiNi_{1-y}M_{y}O₂ (wherein M = Co, Mn, Al, Cu, Fe, Mg, B, Cr, Zn, or Ga and including one or more elements among the above elements, and 0.01≤y≤0.7); a lithium nickel cobalt manganese complex oxide represented by Li_{1+z}Ni_{b}Mn_{c}Co_{1-(b+c+d)}M_{d}O₍₂₋ₑ₎Aₑ (wherein -0.5≤z≤0.5, 0.1≤b≤0.8, 0.1≤c≤0.8, 0≤d≤0.2, 0≤e≤0.2, and b+c+d<1, M = Al, Mg, Cr, Ti, Si, or Y, and A = F, P, or Cl) such as Li_{1+z}Ni_{1/3}Co_{1/3}Mn_{1/3}O₂ or Li_{1+z}Ni_{0.4}Mn_{0.4}Co_{0.2}O₂; an olivine-based lithium metal phosphate represented by Formula Li₁₊ₓM_{1-y}M'_{y}PO_{4-z}X_{z} (wherein M = a transition metal, preferably Fe, Mn, Co, or Ni, M' = Al, Mg, or Ti, X = F, S, or N, and -0.5≤x≤+0.5, 0≤y≤0.5, and 0≤z≤0.1) and the like, but is not limited thereto. The positive electrode active material may be included in an amount of 80 wt% to 99 wt% based on the total weight of a positive electrode active material layer.

As the negative electrode active material, a compound capable of reversible intercalation and deintercalation of lithium may be used. Specific examples thereof may include a carbonaceous material such as artificial graphite, natural graphite, graphitized carbon fiber, and amorphous carbon; a metallic substance alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiOp (0 < β < 2), SnO₂, a vanadium oxide, and a lithium vanadium oxide; or a composite including the metallic substance and the carbonaceous material such as an Si-C composite or an Sn-C composite, and any one thereof or a mixture of two or more thereof may be used. Also, a metal lithium thin film may be used as the negative electrode active material. Furthermore, low crystalline carbon, high crystalline carbon and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes. The negative electrode active material may be included in an amount of 80 wt% to 99 wt% based on the total weight of a negative electrode active material layer.

The binder is a component for assisting in bonding between a conductive material, an active material, and a current collector, and is typically added in an amount of 0.1 wt% to 10 wt% based on the total weight of an active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber, nitrile-butadiene rubber, fluorine rubber, various copolymers thereof, and the like.

The conductive material is a component for further improving the conductivity of an active material, and may be added in an amount of 10 wt% or less, specifically 5 wt% or less, based on the total weight of an active material layer. The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; or a conductive material such as a polyphenylene derivative, and the like may be used.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multilayered structure.

In addition, the electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond, an aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having a high ionic conductivity and a high dielectric constant, which may increase charging/discharging performance of the battery, and a low-viscosity linear carbonate-based compound (e.g., ethyl methyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

Any compound may be used as the lithium salt without particular limitation as long as it may provide lithium ions used in a lithium secondary battery. Specifically, anions of the lithium salt may be at least one selected from the group consisting of F⁻, Cl⁻, Br⁻, I⁻, NO₃-, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. At this time, the additive may be included in an amount of 0.1 to 5 wt% based on the total weight of the electrolyte.

### Step 2

Step 2 is a step of charging the secondary battery and then holding the secondary battery for a predetermined period of time at a voltage of 3.2 V or greater to change the crystal structure of the sacrificial positive electrode material from an orthorhombic structure to a trigonal structure.

Specifically, step 2 may be a step of charging the secondary battery with a C-rate of 0.025 C to 0.2 C, preferably with a C-rate of 0.05 C to 0.2 C, more preferably with a C-rate of 0.05 C to 0.15 C, and then holding a predetermined voltage for a predetermined period of time to change the crystal structure of the sacrificial positive electrode material from an orthorhombic structure to a trigonal structure. Meanwhile, when the C-rate is less than 0.020 C, charging time is increased, so that there is a problem in which the overall time required for an activation process is increased. When the C-rate is greater than 0.2 C, charging is performed at a high rate, so that the battery may be overloaded, resulting in overvoltage, and there is a problem in that it is difficult to form a uniform SEI film.

When the secondary battery is charged to 3.2 V or greater, preferably 3.5 V to 4.0 V, more preferably 3.6 V to 3.9 V, even more preferably 3.7 V to 3.9 V, and then held for a predetermined period of time within the same voltage range, the sacrificial positive electrode material of an orthorhombic structure is permanently changed to a sacrificial positive electrode material of a trigonal structure.

In step 2, the time for holding a voltage may be 30 minutes or more, preferably 30 minutes to 6 hours, preferably 1 hour to 6 hours, and more preferably 2 hours to 5 hours. Meanwhile, when the time for holding a voltage is less than 30 minutes, the crystal structure of the sacrificial positive electrode material may not be completely changed, and when the time is greater than 6 hours, productivity may be degraded due to increased activation process time.

Step 2 may be, for example, a step of performing charging to 3.8 V with a C-rate of 0.1 C, and then holding the voltage at 3.8 V for 3 hours to change a sacrificial positive electrode material of an orthorhombic structure with a space group of Immm to a sacrificial positive electrode material of a trigonal structure with a space group of R-3m.

The crystal structure of the sacrificial positive electrode material which has been subjected to step 2 is permanently changed to a trigonal structure.

The sacrificial positive electrode material which has been subjected to step 2 may be a single phase having a trigonal structure.

The sacrificial positive electrode material which has been subjected to step 2 may change only the crystal structure between a trigonal structure and a monoclinic structure in an available voltage range (e.g., 2.5 V to 4.2 V) in which an actual battery is implemented. Accordingly, a three-step structure change (orthorhombic structure with a space group of Immm -> trigonal structure with a space group of R-3m - > monoclinic structure with a space group of C2/m) does not occur, so that a lithium secondary battery which has been subjected to the activation process according to the present invention may have a reduced content of gas generated when stored for a long period of time at room temperature and at a high temperature.

The sacrificial positive electrode material of a trigonal structure may be represented by Formula 2 below.

[Formula 2] LiNi₁₋ₓMₓO₂

In Formula 2 above,
M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

### Pre-aging step

A pre-aging step is a step of primarily aging the secondary battery at room temperature before performing step 2. Specifically, the pre-aging step is a step of leaving the secondary battery to stand at room temperature for a certain amount of time such that the battery is impregnated with an injected electrolyte solution.

The pre-aging may be performed under the conditions of room temperature and atmospheric pressure such that the electrolyte solution may permeate well the positive electrode and the negative electrode, and may be performed for 24 hours to 72 hours, preferably for 30 hours to 50 hours, and more preferably for 40 hours to 50 hours.

### Room-temperature aging step

A room-temperature aging step is a step of secondarily aging the secondary battery, which has been subjected to step 2, at room temperature.

Through the room-temperature aging step, an SEI film is more stabilized and formed to an even and uniform thickness without being partially non-uniform. That is, an SEI film is generally left to stand at room temperature for a predetermined period of time to be stabilized. Room-temperature aging improves the electrode impregnation properties of a battery electrolyte solution, thereby ensuring the capacity reliability of a battery.

The room-temperature aging may be performed for 24 hours to 72 hours, preferably for 30 hours to 50 hours, and more preferably for 40 hours to 50 hours.

### High-temperature aging step

A high-temperature aging step is a step of thirdly aging the secondarily-aged secondary battery at a high temperature. The high-temperature aging step is also a process which allows the SEI film to be further stabilized and uniformly formed by thermal energy and electrochemical energy.

The high-temperature aging may be performed at 40°C to 80°C, preferably 50°C to 70°C, and more preferably 55°C to 65°C. When the temperature at which the high-temperature aging is performed is lower than 40°C, further stabilization of the SEI film is not facilitated. When higher than 80°C, evaporation of the electrolyte solution may cause an external material to rupture, or cause the battery to ignite, and there is a problem in that battery capacity and lifespan are degraded.

The high-temperature aging may be performed for 12 hours to 48 hours, preferably for 20 hours to 40 hours, and more preferably for 20 hours to 30 hours.

### Degassing step

A degassing step is a step of removing gas from the thirdly-aged secondary battery.

This is to remove side reaction gas generated inside the battery by the aging steps, and the side reaction gas generated inside the battery may be removed through the degassing step. Gas generated in the aging steps may cause the battery to swell, so that the gas may be removed through a degassing process. The degassing process may be performed by opening the seal of the battery case or having a separate gas removal apparatus. When the battery case is opened to degas, an opened portion may be re-sealed later.

### Step of determining whether secondary battery is defective

A step of determining whether the secondary battery is defective or not is to check for abnormalities of the secondary battery, and may be performed using charge/discharge capacity data obtained by charging and discharging the secondary battery in the available voltage range thereof.

Specifically, the step of determining whether the secondary battery is defective or not may include a step of checking the capacity of the battery using charge/discharge capacity data obtained by performing charging and discharging with a C-rate of 0.1 C in the range of 2.5 V to 4.2 V, and a step of checking the capacity of the battery using charge/discharge capacity data obtained by performing charging and discharging with a C-rate of C/3, which is a charge/discharge rate used in an electronic product, in the range of 2.5 V to 4.2 V.

Meanwhile, a lithium secondary battery manufactured according to the activation method of the present invention may be implemented such that the capacity thereof when charged/discharged with a C-rate of C/3 is 97% or more than the capacity thereof when charged/discharged with a C-rate of 0.1 C.

### Lithium secondary battery

A lithium secondary battery according to the present invention includes a positive electrode having a sacrificial positive electrode material represented by Formula 2 below, a negative electrode, a separator interposed between the positive electrode and the negative electrode, and an electrolyte solution.

[Formula 2] LiNi₁₋ₓMₓO₂

In Formula 2 above,
M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

The sacrificial positive electrode material represented by Formula 2 above and having a trigonal structure may be a single phase having a trigonal structure. It is possible to prepare a sacrificial positive electrode material of a trigonal structure represented by Formula 2 by adjusting synthesis conditions when synthesizing the sacrificial positive electrode material. However, when a trigonal structure is formed through synthesis, the crystal structure is unstable, and appears in a state in which a trigonal structure and an orthorhombic structure co-exist. However, when the crystal structure of a sacrificial positive electrode material is changed by a method of holding charging for a predetermined period of time in a voltage range of 3.2 or greater during an activation process as in the present invention, it is possible to form a trigonal structure of a single phase in which an orthorhombic does not co-exit. When an orthorhombic crystal structure is partially included in a sacrificial positive electrode material, a three-step crystal structure change among orthorhombic, trigonal, and monoclinic structures occurs during charging/discharging processes of a battery, so that an effect of suppressing impurities and/or gas generation is reduced.

In comparison, a sacrificial positive electrode material included in the secondary battery of the present invention is formed of a trigonal single phase, so that only the crystal structure change between a trigonal structure and a monoclinic structure may occur in an available voltage range (e.g., 2.5 V to 4.2 V) in which an actual battery is implemented. Accordingly, a three-step structure change (orthorhombic structure with a space group of Immm -> trigonal structure with a space group of R-3m -> monoclinic structure with a space group of C2/m) does not occur, so that a lithium secondary battery which has been subjected to the activation process according to the present invention may have a reduced content of gas generated when stored for a long period of time at room temperature and at a high temperature.

At this time, the trigonal structure may have a space group of R-3m, and the monoclinic structure may have a space group of C2/m.

Meanwhile, the sacrificial positive electrode material included in the secondary battery of the present invention may be that lattice parameter a, c, and γ values of a unit cell are respectively 2.8000 **Å** ≤a≤3.3000 **Å,** 4.8000 **Å**≤c≤5.2000 **Å**, and γ=120°. In this case, lithium ions may be easily de-intercalated from the sacrificial positive electrode material during initial charging, and even when a crystal structure change between a trigonal structure and a monoclinic structure occurs in an available voltage range (e.g., 2.5 V to 4.2 V) in which an actual battery is implemented, there is no significant distortion of the crystal structure, so that side effects may be minimized.

The lithium secondary battery may be a lithium secondary battery manufactured through the activation method according to the present invention.

### PREFERRED MODE FOR CARRYING OUT THE INVENTION

Hereinafter, the present invention will be described in detail with reference to embodiments. However, the embodiments according to the present invention may be modified into other various forms, and the scope of the present invention should not be construed as being limited to the embodiments described below. The embodiments of the present invention are provided to more fully describe the present invention to those skilled in the art.

### Preparation Example

Li₂NiO₂ of an orthorhombic structure with a space group of Immm as a positive electrode material, LiNi_{0.8}Co_{0.1}Mn_{0.1} as a positive electrode material, carbon nanotube as a conductive material, and PVdF as a binder were mixed in an N-methyl-2-pyrrolidone (NMP) solvent at a weight ratio of 5.0:92.8:0.8:1.4 to prepare positive electrode slurry. The positive electrode slurry was applied on one surface of an aluminum current collector, dried, and then roll-pressed to manufacture a positive electrode.

Next, a negative electrode active material in which artificial graphite and natural graphite were mixed at a weight ratio of 9:1, Super C65 as a conductive material, SBR as a binder, and CMC as a thickener were mixed in an N-methyl pyrrolidone (NMP) solvent at a weight ratio of 95.6:1.5:2.3:1.1 to prepare negative electrode slurry. The negative electrode slurry was applied on one surface of an copper current collector, dried, and then roll-pressed to manufacture a negative electrode.

A separator was interposed between the positive electrode and the negative electrode to manufacture an electrode assembly, and then the electrode assembly was placed inside a battery case, followed by injecting an electrolyte solution thereinto to manufacture a lithium secondary battery.

At this time, as the electrolyte solution, an electrolyte solution prepared by dissolving 1 M of LiPF₆ in an organic solvent in which ethylene carbonate:ethyl methyl carbonate:diethyl carbonate were mixed at a volume ratio of 3:4:3 was used.

### Examples

### Example 1

The secondary battery manufactured in Preparation Example was pre-aged at room temperature for 24 hours, and then charged to 3.8 V with a C-rate of 0.1 C, following by holding the voltage at 3.8 V for 3 hours to change the crystal structure of the sacrificial positive electrode material from an orthorhombic structure to a trigonal structure. Then, the secondary battery including the sacrificial positive electrode material whose crystal structure had been changed was room-temperature aged at room temperature for 24 hours, and then high-temperature aged at 60°C for 24 hours. The case of the high-temperature aged secondary battery was opened to degas, and then the opened portion was re-sealed.

The capacity of the battery was checked using charge/discharge capacity data obtained by performing charging and discharging with a C-rate of 0.1 C in the range of 2.5 V to 4.2 V, and the capacity of the battery was checked using charge/discharge capacity data obtained by performing charging and discharging with a C-rate of C/3, which is a charge/discharge rate used in an electronic product, in the range of 2.5 V to 4.2 V to manufacture a secondary battery of good quality.

### Comparative Example 1

The secondary battery manufactured in Preparation Example was pre-aged at room temperature for 24 hours, and then subjected to a process of being charged at room temperature until SOC 30 with a C-rate of 0.1 C, and then being discharged for 3 times. Then, the secondary battery including the sacrificial positive electrode material whose crystal structure had been changed was room-temperature aged at room temperature for 24 hours, and then high-temperature aged at 60°C for 24 hours. The case of the high-temperature aged secondary battery was opened to degas, and then the opened portion was re-sealed.

The capacity of the battery was checked using charge/discharge capacity data obtained by performing charging and discharging with a C-rate of 0.1 C in the range of 2.5 V to 4.2 V, and the capacity of the battery was checked using charge/discharge capacity data obtained by performing charging and discharging with a C-rate of C/3, which is a charge/discharge rate used in an electronic product, in the range of 2.5 V to 4.2 V to manufacture a secondary battery of good quality.

### Experimental Example 1: X-ray diffraction pattern measurement

When the secondary battery was being activated in Example 1, XRD data measurements were performed using in-Situ XRD (Empyrean, PANalytical Co., Ltd)(X-ray source: Mo sealed tube, 60 kV, 35 mA) on the sacrificial positive electrode material (I) at the start of charging with a C-rate of 0.1 C, the sacrificial positive electrode material (II) immediately after the charging to 3.8 V, and the sacrificial positive electrode material (III) after holding the voltage at 3.8 V for three hours. In addition, when the secondary battery activated in Example 1 was being charged again with a C-rate of 0.1 C, XRD data measurements were also performed using in-Situ XRD (Empyrean, PANalytical Co., Ltd)(X-ray source: Mo sealed tube, 60 kV, 35 mA) on the sacrificial positive electrode material (IV) at 2.6 V and the sacrificial positive electrode material (V) at 3.8 V. The result data is shown in FIG. 1.

The secondary battery of good quality manufactured in Comparative Example 1 was charged to SOC 30, 60, and 90 with a C-rate of 0.1 C, and then XRD data measurements were performed using ex-situ XRD(D8 Endeavor, Bruker Co., Ltd)(X-ray source: Cu sealed tube, 40 kV, 40 mA) on the sacrificial positive electrode material included in the secondary battery. The result data is shown in FIG. 2.

Referring to FIG. 1, while step 2 according to the present invention was being performed in Example 1, it can be confirmed that (002) and (101) peaks, which are XRD peaks of an orthorhombic structure, disappeared. In addition, in the case of the secondary battery activated according to the present invention, it can be confirmed that the sacrificial positive electrode material is not changed to have an orthorhombic structure while charging the secondary battery. That is, it can be confirmed that Li₂NiO₂ of an orthorhombic structure is not present in the sacrificial positive electrode material included in the secondary battery on which the activation according to the present invention has been performed.

In comparison, referring to FIG. 2, it can be confirmed from the appearance of the (101) peak, which is an XRD peak of an orthorhombic structure, that Li₂NiO₂ of an orthorhombic structure is still present in the sacrificial positive electrode material included in the secondary battery which has been subjected to a typical activation process (the crystal structure of the sacrificial positive electrode material is sometimes an orthorhombic structure while the secondary battery is being charged). For reference, the reference data of FIG. 2 is the XRD data of Li₂NiO₂ of an orthorhombic structure with a space group of Immm.

### Experimental Example 2

An initial reference performance test (RPT) was performed on each of the secondary batteries manufactured in Example 1 and Comparative Example 1, and the amount of gas generated while performing the initial reference performance test was measured using gas chromatography (gc agilent 7890b). The results are shown in Table 1 below and FIG. 3.

**[Table 1]**

| | Gas generation amount (uL) |
|---|---|
| Example 1 | 450 |
| Comparative Example 1 | 958 |

Referring to Table 1 and FIG. 3, the secondary battery of good quality of Example 1 manufactured through the secondary battery activation method according to the present invention includes only the sacrificial positive of a trigonal structure, and thus, a three-step structure change (orthorhombic structure with a space group of Immm -> trigonal structure with a space group of R-3m -> monoclinic structure with a space group of C2/m) does not occur. Therefore, it can be confirmed that the content of gas thereof generated while performing the initial reference performance test is significantly less than that of the secondary battery of good quality of Comparative Example 1.

Accordingly, it can bee seen that the secondary battery activation method of the present invention includes a process of changing the crystal structure of a sacrificial positive electrode material from an orthorhombic structure to a trigonal structure, and thus, may provide a sacrificial positive electrode material having a crystal structure which may minimize side effects in an available voltage range.

## Claims

1. A method for activating a lithium secondary battery, comprising:
Step 1 of preparing a secondary battery including a positive electrode having a sacrificial positive electrode material represented by Formula 1 below and having an orthorhombic structure, a negative electrode, a separator interposed between the positive electrode and the negative electrode, and an electrolyte solution; and
Step 2 of charging the secondary battery and then holding the secondary battery for a predetermined period of time at a voltage of 3.2 V or greater:
[Formula 1] Li₂Ni₁₋ₓMₓO₂,
wherein in Formula 1 above,
M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

2. The method of claim 1, wherein, in step 2, the charging is performed to 3.2 V or greater with a C-rate of 0.025 C to 0.2 C.

3. The method of claim 1, wherein, in step 2, the secondary battery is held at a voltage of 3.2 V or greater for 30 minutes to 6 hours.

4. The method of claim 1, wherein step 2 is a step of charging the secondary battery to 3.5 V to 4.0 V, and then holding the secondary battery at a voltage of 3.5 V to 4.0 V for 30 minutes to 6 hours.

5. The method of claim 1, wherein through Step 2, the crystal structure of the sacrificial positive electrode material changes from the orthorhombic structure to a trigonal structure.

6. The method of claim 1, wherein the sacrificial positive electrode material which has been subjected to step 2 is a single phase having a trigonal structure.

7. The method of claim 1, wherein the sacrificial positive electrode material of a trigonal structure is represented by Formula 2 below:
[Formula 2] LiNi₁₋ₓMₓO₂,
wherein in Formula 2 above,
M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

8. The method of claim 1, further comprising, before performing step 2, a pre-aging step of primarily aging the secondary battery at room temperature.

9. The method of claim 1, further comprising:
a room-temperature aging step of secondarily aging the secondary battery, which has been subjected to step 2, at room temperature;
a high-temperature aging step of thirdly aging the secondarily-aged secondary battery at a high temperature; and
a degassing step of removing gas from the thirdly-aged secondary battery.

10. The method of claim 9, further comprising, after performing the degassing step, a step of determining whether the secondary battery is defective or not.

11. The method of claim 10, wherein the step of determining whether the secondary battery is defective or not is performed using charge/discharge capacity data obtained by charging the secondary battery from 2.5 V to 4.2 V with a C-rate of 0.1 C to 0.5 C, and then discharging the secondary battery from 4.2 V to 2.5 V.

12. A lithium secondary battery, comprising a positive electrode including a sacrificial positive electrode material represented by Formula 2 below, a negative electrode, a separator interposed between the positive electrode and the negative electrode, and an electrolyte solution,
wherein the sacrificial positive electrode material is a single phase having a trigonal structure in a discharged state:
[Formula 2] LiNi₁₋ₓMₓO₂,
wherein in Formula 2 above,
M is one or more selected from Ti, V, Cr, Mn, Fe, Co, Cu, Zn, Zr, Nb, Mo, Ru, Rh, Pd, Ag, Cd, Hf, Ta, and W, and
0≤x<0.9.

13. The lithium secondary battery of claim 12, wherein the trigonal structure has a space group of R-3m.

14. The lithium secondary battery of claim 12, wherein the sacrificial positive electrode material changes only the crystal structure between a trigonal structure and a monoclinic structure in an available voltage range in which the lithium secondary battery operates.

15. The lithium secondary battery of claim 14, wherein the monoclinic structure has a space group of C2/m.

16. The lithium secondary battery of claim 12, wherein the sacrificial positive electrode material is that lattice parameter a, c, and γ values of a unit cell are respectively 2.8000 Å≤a≤3.3000 Å, 4.8000 Å ≤c≤5.2000 Å, and γ=120°.
